# EUROPÄISCHE PATENTSCHRIFT

(11) **EP 1 085 242 B1**
(45) Veröffentlichungstag und Bekanntmachung des Hinweises auf die Patenterteilung: **08.10.2003**
(21) Anmeldenummer: 00116769.1
(22) Anmeldetag: 03.08.2000
(51) Int. Cl.: F16J 9/20

(54) **Kolbenring**
Piston ring
Segment de piston

(30) Priorität: 16.09.1999 DE 19944453
(43) Veröffentlichungstag der Anmeldung: 21.03.2001
(73) Patentinhaber: Federal-Mogul Burscheid GmbH, 51399 Burscheid (DE)
(72) Erfinder: Michel, Hans-Albert, 51379 Leverkusen (DE)

(56) Entgegenhaltungen:
- DE-A- 3 806 821
- GB-A- 2 164 418
- US-A- 2 459 395
- US-A- 5 779 243

## Beschreibung

Die Erfindung betrifft einen Kolbenring für die dem Brennraum zugewandte erste Nut eines Kolbens von Brennkraftmaschinen mit einer balligen Lauffläche, wobei der Scheitelpunkt der Balligkeit um mehr als die halbe Kolbenringhöhe unterhalb der brennraumseitigen Kolbenringflanke angeordnet ist.

Die GB 2164418 A offenbart eine Kolbenringkombination für einen Kolben von Brennkraftmaschinen mit einem Kompressionsring in der 1. Nut, welcher sich im eingebauten Zustand verdreht oder vertwistet. Auf diese Weise soll erreicht werden, dass die untere Laufflächenkante des Kolbenringes an der Zylinderwand anliegt. Der Kolbenring kann verschiedene Querschnitte aufweisen. Die einzelnen Querschnitte weisen Querschnittsstörungen auf, in Form von Fasen oder Ausnehmungen und dienen dazu, den Kolbenring zur Vertwistung zu zwingen.

Die US 5779243 offenbart einen Kolbenring mit einer balligen Kontur. Maßnahmen, die dazu führen, eine Verdrehung des Kolbenringes zu verhindern, sind auch dieser Schrift nicht zu entnehmen.

Die DE 3806821 A offenbart einen Nasenring für Brennkraftmaschinen, der so ausgelegt ist, dass er sich im Einbauzustand vertwistet. Ein solcher Kolbenring kann nicht in der 1. Nut als Kompressionsring eingesetzt werden.

Die DE 3940 301 A1 offenbart einen gattungsgemäßen Kolbenring. Die Lauffläche des Kolbenrings weist eine asymmetrisch ballige Kontur auf.
Derartige Kolbenringe werden in der 1. und 2. Nut eines Kolbens eingesetzt. Diese Kolbenringe werden auch als Kompressionsringe bezeichnet.

Üblicherweise werden Kolben von Brennkraftmaschinen mit einer Kolbenring - Kombination bestückt, die aus einem 1. und 2. Kompressionsring und einem sogenannten Ölabstreifkolbenring besteht.

Im Bestreben, die Ringe den ihnen im einzelnen Fall gestellten Aufgaben bestmöglich anzupassen, wurden bereits viele verschiedene Ausführungsformen geschaffen. Aus der DE 4429 649 ist eine besondere ballige Kontur für einen Kompressionskolbenring zu entnehmen. Dieser Ring ist so ausgelegt, dass er besonders verschleißfest ist. Kolbenringe der 1. Nut wurden bisher so ausgelegt, dass sie mit hohem Flächendruck an der Zylinderwand anliegen.

Maßnahmen, die darauf abzielen den Ölabstreifeffekt zu verbessern, wurden nur bei den Ringen der 2. oder 3. Nut vorgesehen.

Der Erfindung liegt die Aufgabe zugrunde, einen Kolbenring für die oberste Nut von Kolben von Brennkraftmaschinen zu schaffen, der im Hinblick auf den Ölabstreifeffekt verbessert ist. Diese Aufgabe wird erfindungsgemäß durch die Merkmale des Patentanspruch 1 gelöst. Vorteilhafte Ausgestaltungen der Erfindung sind in den Unteransprüchen dokumentiert.

Durch die besondere Ausgestaltung der Kolbenringlauffläche ist ein Kombinations - Kolbenring geschaffen, der sowohl als Kompressionsring als auch als Ölabstreifring fungiert.
Der dem Brennraum zugekehrte obere Bereich der Lauffläche fungiert als Kompressionsteil, der untere Teil der Lauffläche als Ölabstreifteil.

Die Erfindung ist anhand einer Prinzipskizze in der Zeichnung dargestellt und wird im folgenden näher erläutert.
Es zeigen:
- Figur 1: erfindungsgemäßer Kolbenring im eingebauten Zustand
- Figur 2: Querschnitt eines erfindungsgemäßen Kolbenrings
- Figur 3: Ansicht des Stoßbereichs des Kolbenrings gemäß Figur 2

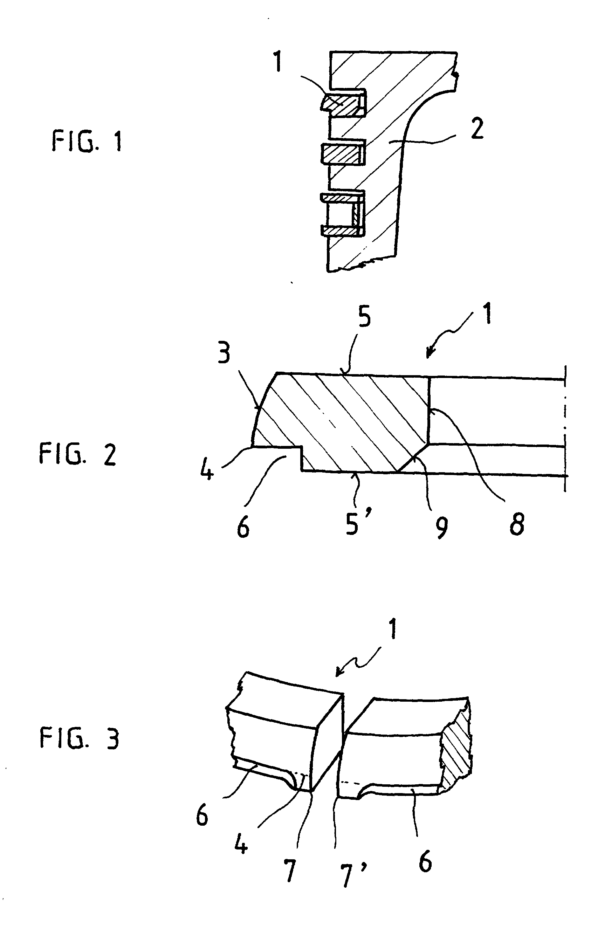

Die Figur 1 zeigt den erfindungsgemäßen Kolbenring 1 in einem Kolben 2 einer Brennkraftmaschine. Der Kolbenring 1 ist als Kompressionsring in der obersten Nut des Kolbens 2 angeordnet.
Wie aus der Figur 2 ersichtlich, weist der Kolbenring 1 eine ballige Lauffläche 3 auf. Der Scheitelpunkt 4 der Balligkeit liegt um mehr als die halbe Kolbenringfläche unterhalb der brennraumseitigen Kolbenringflanke 5. Von der unteren Kolbenringflanke 5' beginnend, erstreckt sich eine Nut 6 in axialer Richtung bis zum Scheitelpunkt 4.
Die Figur 3 zeigt den Verlauf der Nut am Stoß des Kolbenrings 1. An den Stoßenden 7, 7' ist die Nut unterbrochen. Damit der Kolbenring 1 in der obersten Nut nicht vertwistet, ist im Bereich der inneren Umfangsfläche 8 (Fig. 2) eine Querschnittsstörung 9 vorgesehen. Die Größe dieser als Fase oder Ausnehmung ausgebildeten Querschnittsstörung 9 ist so bemessen, dass der Kolbenring 1 bedingt durch die Nut 6 im Einbauzustand parallel zu den Nutflanken liegt.

## Patentansprüche

1. Kolbenring (1) für die dem Brennraum zugewandte erste Nut eines Kolbens von Brennkraftmaschinen, mit einer balligen Lauffläche (3), wobei der Scheitelpunkt (4) der Balligkeit um mehr als die halbe Kolbenringhöhe unterhalb der brennraumseitigen Kolbenringflanke (5) (obere Kolbenringflanke) angeordnet ist, **dadurch gekennzeichnet, dass** auf der Lauffläche (3) eine Nut (6) angeordnet ist, die sich in axialer Richtung von der dem Brennraum abgewandten unteren Kolbenringflanke (5') bis zum Scheitelpunkt (4) der Balligkeit erstreckt, wobei die Nut (6) an den Stoßenden (7,7') des Kolbenringes (1) unterbrochen ist, und dass der Kolbenring (1) im Bereich der inneren Umfangsfläche (8) auf der dem Brennraum abgewandten Seite eine Querschnittsstörung (9) aufweist, die so ausgebildet ist, dass der Kolbenring (1) im Einbauzustand nicht vertwistet.

2. Kolbenring nach Anspruch 1, **dadurch gekennzeichnet, dass** die radiale Tiefe der Nut > 0,5 mm ausgebildet ist.

## Claims

1. Piston ring (1) for the first groove, facing the combustion chamber, of a piston of an internal combustion engine, said ring having a rounded contact face (3) and the summit (4) of the rounded portion being disposed at a distance of more than half the height of the piston ring below the piston ring flank (5) (upper piston ring flank) on the side of the combustion chamber, **characterised in that** on the contact face (3) is arranged a groove (6) which extends in an axial direction from the lower piston ring flank (5'), remote from the combustion chamber, to the summit (4) of the rounded portion, the groove (6) being interrupted at the joint ends (7,7') of the piston ring (1), and **in that** the piston ring (1) has, in the region of the inner circumferential surface (8) on the side remote from the combustion chamber, a cross-sectional interruption (9) which is so formed that the piston ring (1) does not twist in the fitted state.

2. Piston ring according to claim 1, **characterised in that** the radial depth of the groove is configured > 0.5 mm.

## Revendications

1. Segment de piston (1) pour la première rainure d'un piston de moteur à combustion interne, ladite première rainure étant tournée vers la chambre de combustion, ledit segment de piston comprenant une surface de course bombée (3), le point culminant (4) du bombement étant situé à plus de la moitié de la hauteur du segment de piston en dessous du flanc (5) du segment de piston (flanc de segment de piston supérieur) tourné vers la chambre de combustion, **caractérisé en ce qu'**une rainure (6) est prévue sur la surface de course (3), ladite rainure s'étendant en direction axiale à partir du flanc inférieur (5') du segment de piston opposé à la chambre de combustion jusqu'au point culminant (4) du bombement, la rainure (6) étant interrompue au niveau des extrémités de butée (7, 7') du segment de piston (1), et **en ce que** le segment de piston (1) dans la zone de la surface périphérique intérieure (8) comprend sur le côté opposé à la chambre de combustion, une modification de profil (9), qui est réalisé de telle sorte que le segment de piston (1), à l'état monté, ne bascule pas.

2. Segment de piston selon la revendication 1, **caractérisé en ce que** la profondeur radiale de la rainure est supérieure à 0,5 millimètre.
